# EUROPÄISCHE PATENTSCHRIFT

(11) **EP 0 517 028 B1**
(45) Veröffentlichungstag und Bekanntmachung des Hinweises auf die Patenterteilung: **27.09.1995**
(21) Anmeldenummer: 92108397.8
(22) Anmeldetag: 19.05.1992
(51) Int. Cl.: C08G 18/62, C08G 18/75, C08G 18/80, C09D 175/04

(54) **Pulverlack und seine Verwendung**
Powder coating and its use
Vernis pulvérulent et son utilisation

(30) Priorität: 01.06.1991 DE 4118052
(43) Veröffentlichungstag der Anmeldung: 09.12.1992
(73) Patentinhaber: BAYER AG, 51368 Leverkusen (DE)
(72) Erfinder: Halpaap, Reinhard, Dr., W-5068 Odenthal-Glöbusch (DE); Wamprecht, Christian, Dr., W-4040 Neuss 22 (DE); Kreuder, Hans-Joachim, Dr., W-4154 Tönisvorst 2 (DE); Schultz, Wolfgang, W-4150 Krefeld 11 (DE); Bock, Manfred, Dr., W-5090 Leverkusen (DE); Rettig, Rainer, Dr. Sumitomo Bayer Urethane Ltd., Hyogo, Pref. 661 (JP)

(56) Entgegenhaltungen:
- EP-A- 0 272 346
- EP-A- 0 408 997
- US-A- 3 660 355
- US-A- 3 931 117
- US-A- 3 993 849
- US-A- 4 824 909

## Beschreibung

Die vorliegende Erfindung betrifft einen neuen Pulverlack auf Basis von ε-Caprolactam-blockierten Polyisocyanaten und hydroxyfunktionellen Polyacrylaten und die Verwendung dieses Pulverlacks bei der Herstellung von Beschichtungen auf beliebigen hitzeresistenten Substraten, insbesondere für Automobilklarlacke.

Pulverlacke auf Polyurethanbasis sind bekannt (vergl. z.B. DE-AS 1 957 483, DE-OS 2 047 718, DE-OS 2 064 098, DE-PS 2 127 839, DE-OS 2 246 620, DE-AS 2 351 477, DE-OS 2 429 517).

Sie bestehen meist aus einer Kombination von festen Polyhydroxylverbindungen und festen, in der Regel blockierten Polyisocyanaten.

Als Polyhydroxylverbindungen dominieren in der Praxis Polyester, jedoch sind auch PUR-Pulverlacke auf Polyacrylatbasis seit langem bekannt. So beschreibt die DE-OS 1 771 374 PUR-Pulverlacke, bestehend aus OH-funktionellen Polyacrylaten, die in Masse unter Siedekühlung hergestellt werden, und mit Phenol-verkappten Polyisocyanaten auf Basis von Toluylendiisocyanat. Als Pulverlack geeignete Polyacrylate in Kombination mit aromatischen Polyisocyanaten als Vernetzer werden beispielsweise auch in DE-OS 2 127 839 und DE-OS 2 127 922 beschrieben. Solche Pulverlacke sind jedoch wegen der Vergilbungsneigung von aromatischen Polyisocyanaten für Außenanwendungen ungeeignet.

Als Härterkomponenten für lichtechte Lacksysteme kommen daher blockierte Polyisocyanate, ausgehend von aliphatischen Diisocyanaten, zum Einsatz. Dabei handelt es sich überwiegend um Derivate, z.B. Urethane oder Isocyanurate, auf Basis von Isophorondiisocyanat (IPDI), die endständig mit ε-Caprolactam blockiert sind (vergl. z.B. DE-OS oder -PS 2 105 777, 2 542 191, 2 712 931, 2 735 497, 2 842 641, 2 929 224, 3 004 876, 3 039 824, 3 143 060 und 3 328 131).

Aus diesen mit ε-Caprolactam blockierten IPDI-Derivaten werden beim Einbrennen mit geeigneten Polyhydroxylverbindungen, wie z.B. Polyestern, bei leichter Handhabbarkeit und guter Lagerstabilität, Lacke erhalten, die sich durch guten Verlauf, hohe Härte und Elastizität sowie gute Chemikalienbeständigkeit auszeichnen. Ein wesentlicher Nachteil dieser Polyurethan-Pulverlacke ist jedoch die hohe Einbrenntemperatur von ca. 200°C.

Es hat daher nicht an Versuchen gefehlt, die hohen Einbrenntemperaturen durch Auswahl anderer Blockierungsmittel zu senken. So wurden z.B. Triazole (DE-OS 2 812 252), cyclische Amidine (DE-OS 2 946 085), sekundäre Amine (DE-OS 3 434 881) oder Ketoxime (US 3 857 818, EP 401 343, EP 409 745) als Blockierungsmittel mit niedrigen Abspalttemperaturen für Polyurethan-Pulverlackhärter vorgeschlagen.

Neben Pulverlackhärtern auf Basis von IPDI wird in den zahlreichen oben beispielhaft zitierten Vorveröffentlichungen auch auf die Verwendbarkeit anderer aliphatischer Diisocyanate für Pulverlackhärter hingewiesen. Blockierte Polyisocyanate aus Di- oder Triisocyanaten sind z.B. auch beschrieben in: DE-OS 3 128 743, EP 132 515, EP 132 518, EP 218 040, DE-PS 2 801 126.

Keine dieser beispielhaft zitierten Veröffentlichungen gibt einen Hinweis darauf, daß ε-Caprolactam-blockierte Härter auf Basis aliphatischer Diisocyanate in Abhängigkeit von diesen bei Kombination mit festen Polyhydroxylverbindungen bei besonders niedrigen Temperaturen, insbesondere ≦ 160°C, aushärten. Nur in einem ganz speziellen Fall (EP-A-0 403 779), ist mit dem 2fach ε-Caprolactam-blockierten m-Tetramethylxylylendiisocyanat ein Härter genannt, der aufgrund seiner besonderen Struktur mit ausschließlich tert. gebundenen Isocyanatgruppen, ab ca. 140°C Einbrenntemperatur als Pulverlackhärter für niedrige Einbrenntemperaturen geeignet ist.

Die Verwendung von Katalysatoren für die Umsetzung fester blockierter Polyisocyanate mit festen Polyhydroxylverbindungen gehört zum Stand der Technik, und es hat nicht an Versuchen gefehlt, durch eine geeignete Auswahl an Katalysatoren die erforderlichen Einbrenntemperaturen zu senken. Hier sei beispielhaft die DE-OS 3 525 110 genannt, in der mit Dioctylzinnoxid (und/oder -sulfid) ein ganz spezieller Katalysator beschrieben wird, mit Hilfe dessen die Einbrenntemperaturen für ε-Caprolactam-blockierte Polylsocyanate bis auf 170°C gesenkt wurden konnten.

Es war die der Erfindung zugrundeliegende Aufgabe, einen neuen Pulverlack zur Verfügung zu stellen, der die Vorteile der Pulverlacke des Standes der Technik In sich vereinigt und außerdem bei deutlich unter 170°C liegenden Temperaturen aushärtbar ist.

Diese Aufgabe konnte mit der Bereitstellung des nachstehend näher beschriebenen Pulverlacks gelöst werden, dessen wesentliche Bindemittelkomponente aus speziellen Hydroxylgruppen aufweisenden Polyacrylaten und dessen Härter aus ε-Caprolactam-blockiertem, insbesondere mit Diolen urethanmodifiziertem 4,4'-Diisocyanatodicyclohexylmethan besteht.

Die Erkenntnis, daß es mit dieser Bindemittelkombination mögllch ist, Beschichtungen hoher Lösungsmittelbeständigkeit und Elastizität bei gleichzeitig niedriger Einbrenntemperatur herzustellen, muß als überraschend bezeichnet werden. Von Pulverlacken auf Basis von Polyhydroxypolyacrylaten war, im Unterschied zu solchen auf Basis von Polyesterpolyolen, bekannt, daß sie eher zu spröden Lackfilmen führen. Im übrigen findet sich in den einschlägigen Vorveröffentlichungen, die auch 4,4'-Diisocyanatodicyclohexylmethan bzw. seine Derivate in ε-Caprolactam-blockierter Form als Härter erwähnen, keinerlei Hinweis auf die Sonderstellung dieses Diisocyanats in Kombination mit Polyacrylaten in Bezug auf die Einbrenntemperatur und Elastizität der Beschichtungen (vergl. z.B. US-PS 3 931 117, US-PS 3 933 759 oder DE-OS 3 525 110). Die erstgenannte US-PS 3 931 117 erwähnt zwar u.a. auch ε-Caprolactam-blockierte, Urethan-modifizierte Derivate des 4,4'-Diisocyanatodicyclohexylmethans gleichwertig neben entsprechenden Derivaten des IPDI, jedoch werden gemäß Ausführungsbeispielen zur Urethan-Modifizierung des Ausgangsdiisocyanats stets dreiwertige Alkohole, insbesondere Trimethylolpropan, eingesetzt. Die konkret beschriebenen Pulverlacke sind keineswegs dazu geeignet, die oben definierte erfindungsgemäße Aufgabe einer Lösung näherzubringen.

Gegenstand der Erfindung ist ein Pulverlack zur Herstellung von vergilbungsfreien elastischen Beschichtungen, bestehend im wesentlichen aus einem unterhalb 30°C festen und oberhalb 120°C flüssigen Gemischs aus
A) einer Polyisocyanatkomponente, bestehend aus mindestens einem mit ε-Caprolactam blockierten Polyisocyanat,
B) einer Polyolkomponente,
C) Katalysatoren für die Reaktion zwischen Hydroxyl- und blockierten Isocyanatgruppen,
und gegebenenfalls
D) aus der Pulverlacktechnologie bekannten Hilfs- und Zusatzmitteln,
wobei die Komponenten A) und B) in solchen Mengen vorliegen, die einem Äquivalentverhältnis von blockierten Isocyanatgruppen zu Hydroxylgruppen von 0,5 : 1 bis 1,2 : 1 entsprechen, dadurch gekennzeichnet, daß
A) die blockierten Polyisocyanate der Komponente A) einen Gehalt an blockierten Isocyanatgruppen (berechnet als NCO, Molekulargewicht = 42) von 3,0 bis 14,0 Gew,-% bei einer Funktionalität, bezogen auf die blockierten Isocyanatgruppen, von 1,9 bis 2,3 aufweisen und ε-Caprolactam-blockierte Umsetzungsprodukte von 4,4'-Diisocyanatodicyclohexylmethan mit einer Polyolkomponente darstellen, die zumindest zu 50 Gew.-% aus mindestens einem aliphatischen oder cycloaliphatischen Diol mit 4 bis 12 Kohlenstoffatomen bei einem (mittleren) Molekulargewicht der Diolkomponente von 90 bis 400 besteht,
B) die Polyolkomponente aus mindestens einem Polyhydroxypolyacrylat des OH-Zahlbereichs 40 bis 120 besteht,
und
C) die Katalysatorkomponente aus mindestens einer organischen Zinnverbindung besteht.

Gegenstand der Erfindung ist auch die Verwendung dieses Pulverlacks zur Beschichtung beliebiger hitzeresistenter Substrate nach den Methoden der Pulverlack-Technologie, insbesondere als Automobilklarlack.

Die in dem erfindungsgemäßen Pulverlack vorliegende Komponente A) besteht aus mindestens einem ε-Caprolactamblockierten, Urethan-modifizierten 4,4'-Diisocyanatodicyclohexylmethan. Ausgangsmaterialien zur Herstellung der Komponente A) sind somit 4,4'-Diisocyanatodicyclohexylmethan, organische, mehrwertige Alkohole und ε-Caprolactam.

Als 4,4'-Diisocyanatodicyclohexylmethan können beliebige, marktübliche Produkte Verwendung finden, wobei es auf die cis/trans-Isomerie nicht entscheidend ankommt.

Die Polyolkomponenten zur Urethanmodifizierung des Ausgangsdiisocyanats besteht zumindest zu 50 Gew-%, vorzugsweise zumindest zu 80 Gew.-%, und besonders bevorzugt zu 100 Gew.-%, aus aliphatischen oder cycloaliphatischen Diolen mit 4 bis 12, insbesondere 6 bis 12, Kohlenstoffatomen. Im übrigen weist die Polyolkomponente zur Modifizierung der Ausgangsdiisocyanate ein (mittleres) Molekulargewicht von 90 bis 400, vorzugsweise von 90 bis 250, auf.

Wesentlicher Bestandteil der Polyolkomponente zur Modifizierung der Ausgangsdiisocyanate sind jedenfalls die nachfolgend genannten Diole, wobei neben diesen auch einwertige Alkohole des Molekulargewichtsbereichs 32 bis 130 wie beispielsweise Methanol, Ethanol, Isopropanol oder n-Hexanol oder auch höherwertige Alkohole in Betracht kommen. Die mittlere Hydroxylfunktionalität der zur Modifizierung der Ausgangsdiisocyanate eingesetzten Polyolkomponente muß jedenfalls so gewählt werden, daß die ε-Caprolactam-blockierten, Urethan-modifizierten Polyisocyanate A) eine Funktionalität, bezogen auf die blockierten NCO-Gruppen von 1,9 bis 2,3, vorzugsweise 2,0 bis 2,2, aufweisen.

2- und mehrwertige Alkohole, die zur Modifizierung der Ausgangsdiisocyanate eingesetzt werden können, sind beispielsweise die isomeren Butandiole, Hexandiole, Octandiole, Diethylenglykol, Triethylenglykol, Dipropylenglykol, Tripropylenglykol, 4,4'-Dihydroxydicyclohexylmethan, 2,2-Bis-(4-hydroxycyclohexyl)propan, 1,4-Bis-(2-hydroxyethoxy)benzol, 1,4-Bishydroxymethylcyclohexan, 2,2-Dimethyl-1,3-propandiol, Trimethylolpropan, N,N',N''-Trishydroxyethylisocyanurat oder Pentaerythrit oder um Gemische derartiger Polyhydroxylverbindungen. Die 3- und/ oder 4-wertigen Hydroxylverbindungen werden, wenn überhaupt, nur in untergeordneten Mengen mitverwendet. Unter den Diolen sind die linearen, aliphatischen Verbindungen bevorzugt, wie z.B. 1,4-Butandiol, 1,6-Hexandiol und/oder Diethylenglykol.

Als Blockierungsmittel kommt ε-Caprolactam zum Einsatz.

Zur Herstellung der blockierten Polyisocyanate A) kann man entweder zunächst 4,4'-Diisocyanatodicyclohexylmethan mit der gewählten Menge Blockierungsmittel ε-Caprolactam umsetzen, bis der berechnete NCO-Gehalt erreicht oder leicht unterschritten ist und nachfolgend die noch übrigen freien NCO-Gruppen mit den Hydroxylgruppen der Polyole umsetzen. Diese Verfahrensweise wird bevorzugt. Man kann aber auch zunächst das Diisocyanat mit den ausgewählten Polyolen umsetzen, bis der berechnete NCO-Gehalt erreicht oder leicht unterschritten ist, und nachfolgend die noch freien NCO-Gruppen mit dem Blockierungsmittel ε-Caprolactam umsetzen, bis die Komponente A) praktisch keine, d.h. weniger als 0,5 Gew.-%, freie Isocyanatgruppen mehr aufweist. Bei dieser Art der Herstellung der Polyisocyanate A) wird das Ausgangsdiisocyanat mit den beispielhaft genannten Polyolen unter Einhaltung eines NCO/OH-Äquivalentverhältnisses von 1,2 : 1 bis 5 : 1, vorzugsweise von 1,4 : 1 bis 3 : 1, umgesetzt, worauf sich die Blockierung der überschüssigen, nicht umgesetzten Isocyanatgruppen mit ε-Caprolactam anschließt. Bei dieser Blockierungsreaktion muß die Menge des Blockierungsmittels so bemessen werden, daß mindestens 80 % der nach der Urethanisierung noch vorliegenden NCO-Gruppen, vorzugsweise 100 % dieser Isocyanatgruppen blockiert werden. Gegebenenfalls kann ein bis zu 10-gew.-%iger Überschuß an ε-Caprolactam, bezogen auf die nach der Urethanisierungsreaktion noch vorliegenden freien Isocyanatgruppen eingesetzt werden. Zur Herstellung der blockierten Ausgangspolyisocyanate A) kann man jedoch auch 4,4'-Diisocyanatodicyclohexylmethan mit einer Mischung aus beispielhaft genanntem Polyol und ε-Caprolactam in einem Schritt umsetzen, so daß die Urethanbildungsreaktion und die Blockierungsreaktion nahezu gleichzeitig nebeneinander ablaufen.

Die zur Urethanbildung erforderliche Reaktionstemperatur liegt bei dem beschriebenen Verfahren bei 40 bis 200°C, bevorzugt bei 60 bis 160°C, besonders bevorzugt bei 60 bis 130°C. Die zur Blockierung mit ε-Caprolactam erforderliche Reaktionstemperatur liegt bei 40 bis 160°C, besonders bevorzugt bei 80 bis 140°C. Beide Umsetzungen können durch geeignete bekannte Katalysatoren, wie z.B. tert. Amine oder Metallsalze beschleunigt werden, jedoch ist die unkatalysierte Reaktionsführung bevorzugt. Die Umsetzung wird bevorzugt ohne Lösungsmittel durchgeführt, doch kann in manchen Fällen die Verwendung inerter Lösungsmittel angezeigt sein. Gegebenenfalls können die blockierten Polyisocyanate A) jedoch auch in Lösungsmitteln hergestellt werden und anschließend z.B. durch ein Ausdampfverfahren, wie nachfolgend bei der Herstellung der Komponenten B) beschrieben, vom Lösungsmittel befreit und isoliert werden.

Durch das beschriebene Verfahren werden feste, lineare bis leicht verzweigte blockierte Polyisocyanate A) der genannten Funktionalität erhalten, die einen Schmelzpunkt im Bereich von ca. 30 bis 120°C, bevorzugt von 50 bis 110°C, einen blockierten NCO-Gehalt, berechnet als NCO (MG = 42) von 3,0 bis 14,0 Gew.-%, bevorzugt von 7,0 bis 11,0 Gew.-% und einen freien NCO-Gehalt von weniger als 0,5 Gew.-% aufweisen.

Die Polyolkomponente B) besteht aus mindestens einem Acrylatpolyol und weist eine Hydroxylzahl von 40 bis 120 auf. Die Polyacrylatkomponente B) weist im übrigen einen Schmelzpunkt oder -Bereich von ca. 30 bis 120°C, vorzugsweise von 50 bis 110°C, auf.

Es handelt sich bei diesen Copolymerisaten um solche aus
a) 20 bis 50 Gew.-Teilen, bevorzugt 30 bis 45 Gew.-Teilen, Methylmethacrylat
b) 20 bis 40 Gew.-Teilen, bevorzugt 20 bis 30 Gew.-Teilen, Alkylestern der Acryl- und/oder Methacrylsäure mit 2 bis 8 Kohlenstoffatomen im Alkylrest,
c) 0 bis 30 Gew.-Teilen, bevorzugt 5 bis 25 Gew.-Teilen, Styrol,
d) 10 bis 30 Gew.-Teilen, bevorzugt 12 bis 28 Gew.-Teilen, Hydroxyethylmethacrylat und/oder Hydroxypropylmethacrylat
und
e) 0,1 bis 3,0 Gew.-Teilen, bevorzugt 0,5 bis 1,5 Gew.-Teilen Acrylsäure und/oder Methacrylsäure
mit der Maßgabe, daß die Summe der Gewichtsteile der Komponenten a) bis e) 100 ergibt.

Bei den Monomeren b) handelt es sich vorzugsweise um Alkylester der Acryl- oder Methacrylsäure, wie z.B. Ethyl(meth)acrylat, n-Propyl(meth)acrylat Isopropyl-(meth)acrylat, n-Butyl(meth)acrylat, Isobutyl(meth)acrylat und 2-Ethylhexyl(meth)acrylat.

Die Herstellung der Polyacrylatpolyole B) erfolgt vorzugsweise durch radikalisch initiierte Copolymerisation der obengenannten Monomeren in geeigneten organischen Lösungsmitteln.

Dabei werden die Monomeren bei Temperaturen von 60 bis 180°C, vorzugsweise 80 bis 160°C, in Gegenwart von Radikalbildnern und gegebenenfalls Molekulargewichtsreglern copolymerisiert.

Die Herstellung der Copolymerisate erfolgt vorzugsweise in inerten, organischen Lösungsmitteln. Geeignete Lösungsmittel sind beispielsweise Aromaten, wie Toluol oder Xylol, Ester wie Ethylacetat oder Butylacetat, Ketone, wie Aceton, Methylethylketon oder Methylisobutylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Nach dieser Verfahrensweise erhält man organische Lösungen der Hydroxylgruppen aufweisenden Polyacrylate B), die durch Abdampfen des Lösungsmittels als gebrauchsfertige Feststoffe des obengenannten Schmelzverhaltens und der obengenannten Hydroxylzahl isoliert werden.

Das Lösungsmittel bzw. das Lösungsmittelgemisch wird dabei möglichst vollständig, in der Regel bis auf einen Restgehalt ≦ 2 Gew.-%, bevorzugt ≦ 1 Gew.-%, beispielsweise durch Sprühtrocknen, Entgasung in Ausdampfextrudern oder Vakuumdestillation, entfernt.

Bei der erfindungswesentlichen Katalysatorkomponente C) handelt es sich um Zinnverbindungen, die als an sich für die Additionsreaktion von Hydroxyl- an Isocyanatgruppen übliche Katalysatoren bekannt sind. Mit diesen an sich üblichen Katalysatoren kann die Einbrenntemperatur der Pulverlacke jedoch nur im Fall der Verwendung der oben beschriebenen erfindungsgemäßen Polyisocyanate A) auf Basis von Diisocyanatodicyclohexylmethan auf Werte von 140 bis 170°C erniedrigt werden, während entsprechende Polyisocyanate auf Basis von z.B. Isophorondiisocyanat bei diesen niedrigen Temperaturen noch keine ausreichend vernetzten Lackfilme liefern, wie auch nachstehende Vergleichsbeispiele belegen.

Als Zinnverbindungen C) kommen vorzugsweise Zinn(II)-salze von C₆-C₁₂-Alkancarbonsäuren, wie z.B. Zinn(II)-hexanoat, Zinn(II)-octanoat oder Zinn(II)-laurat zum Einsatz, von denen Zinn(II)-octanoat (im wesentlichen Zinn-(II)-2-ethyl-hexanoat) ganz besonders bevorzugt ist.

Zinn(IV)-Verbindungen können ebenfalls eingesetzt werden, sind aber nicht bevorzugt, z.B. Dibutylzinnoxid, Dibutylzinndichlorid, Dibutylzinndiacetat, Dibutylzinndilaurat, Dibutylzinnmaleat oder Dioctylzinndiacetat. Gegebenenfalls kommen auch Katalysatorgemische zum Einsatz.

Weitere Vertreter von geeigneten Katalysatoren sowie Einzelheiten über die Wirkungsweise von solchen Katalysatoren sind im Kunststoffhandbuch - Band VII, herausgegeben von Vieweg und Höchtlen, Carl-Hanser-Verlag, München 1966, z.B. auf den Seiten 96 bis 102, beschrieben.

Bei den gegebenenfalls mitzuverwendenden Hilfs- und Zusatzmitteln D) handelt es sich beispielsweise um Verlaufsmittel, wie z.B. Polybutylacrylat oder solchen auf Basis von Polysilikonen, Lichtschutzmittel, wie z.B. sterisch gehinderte Amine oder UV-Absorber, z.B. Benztriazole oder Benzophenone, und Pigmente, wie z.B. Titandioxid.

Zu den oftmals, gegebenenfalls neben weiteren Hilfs- und Zusatzmitteln eingesetzten Zusatzmitteln D) gehören insbesondere Farbstabilisatoren gegen die Gefahr der Überbrennvergilbung. Geeignet sind insbesondere, gegebenenfalls inerte Substituenten aufweisende Trialkyl- und/oder -arylphosphite wie beispielsweise Triethylphosphit, Triphenylphosphit oder bevorzugt Trisalkylphenylphosphite, wobei die Alkylsubstituenten 6 bis 12 Kohlenstoffatome aufweisen. Ganz besonders bevorzugt ist Trisnonylphenylphosphit (technisches Produkt, bestehend im wesentlichen aus einem Ester der phosphorigen Säure mit dem Anlagerungsprodukt von Tripropylen an Phenol).

Zur Herstellung des gebrauchsfertigen Pulverlacks kann beispielsweise so vorgegangen werden, daß die Einzelkomponenten nach ihrer Pulverisierung miteinander vermischt werden. In einem solchen Falle bestünden die einzelnen Pulverpartikel aus den Einzelkomponenten A), B), C) oder gegebenenfalls D). Gemäß der bevorzugten Art der Herstellung der Pulverlacke werden jedoch die Bestandteile A), B), C) und gegebenenfalls D) innig miteinander vermischt und beispielsweise in Extrudern oder Knetern bei Temperaturen oberhalb des Schmelzbereichs der Einzelkomponenten, beispielsweise bei 70 bis 140°C, zu einem homogenen Material vereinigt.

Der nach Abkühlung der Schmelze resultierende Feststoff wird anschließend gemahlen und durch Sieben von den Kornanteilen oberhalb der gewünschten Korngröße, beispielsweise oberhalb 0,1 mm, befreit. Auf diese Weise entstehen "gemischte Pulver", in denen jedes einzelne Pulverpartikel bereits die Einzelkomponenten A), B), C) und gegebenenfalls D) enthält.

Die Reihenfolge der Vereinigung der Einzelkomponenten A) bis D) ist weitgehend frei wählbar. So können z.B. Katalysator C) und Zusatzmittel D) schon bei der Herstellung der Polyisocyanatkomponente A) dieser zugefügt werden, oder aber diese Einzelkomponenten können z.B. nach der Polymerisation aber vor dem Ausdampfen der Komponente B) zugegeben werden.

Die Mengenverhältnisse der Einzelkomponenten A) und B) werden im übrigen so gewählt, daß auf jede Hydroxylgruppe der Komponente B) 0,5 bis 1,2, vorzugsweise 0,6 bis 1,0 blockierte Isocyanatgruppen der Komponente A) entfallen. Die Katalysatorkomponente C) kommt in Anteilen von 0,1 bis 5 Gew.-%, vorzugsweise 0,2 bis 3 Gew.-%, bezogen auf die Summe der Komponenten A) und B) zum Einsatz. Das als Zusatzmittel D) bevorzugt eingesetzte Phosphit wird in Mengen bis zu 5 Gew.-%, bevorzugt bis zu 3 Gew.-%, bezogen auf die Summe der Komponenten A) und B), verwendet.

Die so hergestellten Pulverlacke können nach üblichen Pulverauftragsverfahren, wie z.B. elektrostatischem Pulverversprühen oder Wirbelsintern, auf die zu überziehenden Substrate aufgebracht werden. Die Härtung der Überzüge erfolgt durch Erhitzen auf Temperaturen von 140 bis 220°C, vorzugsweise 140 bis 170°C, beispielsweise während eines Zeitraumes von 10 bis 60 Minuten. Man erhält harte, glänzende, lösungsmittelbeständige und ausreichend elastische Überzüge mit hervorragenden Korrosionsschutzeigenschaften und einer guten Wärmefarbstabilität.

Erfindungsgemäß können beliebige hitzeresistente Substrate, wie beispielsweise solche aus Glas oder Metallen, beschichtet werden.

Die in den nachfolgenden Beispielen genannten Teile und Prozente sind, sofern nicht anders angegeben, Gewichtsteile bzw. Gewichtsprozente.

### Beispiele

### Beispiel 1

### (Herstellung einer erfindungsgemäßen Polyisocyanatkomponente A))

524 Teile 4,4'-Diisocyanatodicyclohexylmethan werden in einem Reaktionsgefäß bei ca. 100°C vorgelegt und ohne weiteres Heizen bei dieser Temperatur mit 226 Teilen ε-Caprolactam portionsweise versetzt. Man läßt die exotherme Reaktion im Bereich von 100 bis 130°C ablaufen und erreicht nach ca. 20minütigem Nachrühren bei dieser Temperatur den berechneten NCO-Gehalt von ca. 11,2 %. Ohne Abzukühlen werden bei ca. 120°C 118 Teile 1,6-Hexandiol zugegeben, und man rührt die viskoser werdende Schmelze bei dieser Temperatur ca. 3 h nach, bis ein freier NCO-Gehalt ≦ 0,5 % titriert wird und nicht weiter abnimmt. Man gießt die Schmelze auf ein Blech und läßt abkühlen. Man erhält ein lagerstabiles helles Festharz mit einem Schmelzpunkt von ca. 75°C, einem blockierten NCO-Gehalt von 9,7 % (berechnet als NCO) und einem freien NCO-Gehalt von 0,2 %.

### Beispiel 2

### (Herstellung einer erfindungsgemäßen Polyisocyanatkomponente A))

Man verfährt wie in Beispiel 1 und rührt nach Reaktionsende als Zusatzmittel D) 35 Teile Trisnonylphenylphosphit 30 Minuten bei 130°C bis zur homogenen Verteilung ein. Man erhält ein lagerstabiles helles Festharz mit einem Schmelzpunkt von ca. 75°C, einem blockierten NCO-Gehalt von 9,3 % und einem freien NCO-Gehalt von 0,3 %.

### Beispiel 3

### (Herstellung einer erfindungsgemäßen Polyisocyanatkomponente A))

Wie in Beispiel 1 beschrieben, werden 524 Teile 4,4'-Diisocyanatodicyclohexylmethan mit 226 Teilen ε-Caprolactam, 59 Teilen 1,6-Hexandiol und 52 Teilen 2,2-Dimethyl1,3-propandiol umgesetzt, und es werden bei 130°C 34 Teile Trisnonylphenylphosphit eingerührt. Man erhält ein lagerstabiles helles Festharz mit einem Schmelzpunkt von ca. 80°C, einem blockierten NCO-Gehalt von 9,4 % und einem freien NCO-Gehalt von 0,4 %.

### Vergleichsbeispiel A

### (Herstellung einer Polyisocyanatkomponente auf Basis IPDI zum Vergleich)

Nach dar wie im Beispiel 1 beschriebenen Verfahrensweise werden 444 Teile Isophorondiisocyanat mit 226 Teilen ε-Caprolactam und 118 Teilen 1,6-Hexandiol umgesetzt, und bei 130°C werden 33 Teile Trisnonylphenylphosphit eingerührt. Man erhält ein lagerstabiles helles Festharz mit einem Schmelzpunkt von ca. 80°C, einem blockierten NCO-Gehalt von 10,2 % und einem freien NCO-Gehalt von 0,2 %.

### Beispiele 4 bis 7

### (Herstellung von erfindungsgemäßen Hydroxylpolyacrylaten B))

### Allgemeine Herstellvorschrift

In einem 25-1-Edelstahldruckreaktor mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 4 Stunden) und Teil III (Zugabe über einen Zeitraum von insgesamt 5 Stunden) zudosiert. Anschließend wird 2 Stunden bei der angegebenen Temperatur nachgerührt. Die erhaltenen Polymerlösungen werden in einem handelsüblichen Ausdampfextruder bei einer Temperatur von ca. 150°C, einer Verweilzeit von ca. 2 Minuten und einem Vakuum von ca. 200 mbar vollständig vom Lösungsmittel befreit, das Produkt anschließend abgekühlt und granuliert.

Die Reaktionstemperaturen und die Zusammensetzungen der Teile I bis III sind in Tabelle 1 zusammen mit den Kenndaten der erhaltenen Copolymerisate aufgeführt.

**Tabelle 1**

| Hydroxylgruppen enthaltende Copolymerisate B₁ bis B₄ (Mengenangaben in g) | | | | |
|---|---|---|---|---|
| Beispiel | 4 | 5 | 6 | 7 |
| Copolymerisate | | | | |
| Teil I | | | | |
| Toluol | 9000 | 9000 | | 9000 |
| Methylisobutylketon | | | 9000 | |

| Teil II | | | | |
|---|---|---|---|---|
| Methylmethacrylat | 3660 | 4328 | 3916 | 4308 |
| n-Butylmethacrylat | 2374 | 2690 | | |
| 2-Ethylhexylacrylat | | | | 1958 |
| n-Butylacrylat | | | 1958 | |
| Styrol | 1868 | 1258 | 1958 | 980 |
| 2-Hydroxyethylmethacrylat | 1892 | 1418 | | |
| Hydroxypropylmethacrylat ^{*)} | | | 1836 | 2360 |
| Acrylsäure | 100 | 98 | | |
| Methacrylsäure | | | 122 | 186 |

| Teil III | | | | |
|---|---|---|---|---|
| tert.-Butylperoxy-2-ethyl-hexanoat (70 %ig) | 480 | 582 | 582 | 582 |
| Toluol | 668 | 626 | | 626 |
| Methylisobutylketon | | | 628 | |
| Polymerisationstempertur (°C) | 125 | 110 | 115 | 110 |
| Festgehalt (%) (bezogen auf Lösung) | 50,7 | 50,1 | 50,2 | 51,2 |
| Viskosität bei 23°C (mPa.s) | 1880 | 1320 | 270 | 2720 |

| nach Ausdampfen (bezogen auf Festharz) | | | | |
|---|---|---|---|---|
| OH-Zahl | 70 | 64 | 68 | 84 |
| Säurezahl | 7,4 | 4,8 | 3,9 | 6,0 |

| | | | | |
|---|---|---|---|---|
| *) Technisches Gemisch aus 2- und 3-Hydroxypropylmethacrylat | | | | |

### Beispiel 8 und Vergleichsbeispiel B

### (Verwendung)

Dieses Beispiel (8) belegt für einen erfindungsgemäßen Klarlack die niedrige Einbrenntemperatur ab 150°C und zeigt beim Vergleichsbeispiel (B) anhand der Gelierzeiten die deutlich langsamere Vernetzung ohne die erfindungswesentliche Katalysatorkomponente C).

Aus folgenden Komponenten werden Klarlacke bereitet:

| (Angaben in Gew.-Teilen) | | |
|---|---|---|
| | Beispiel 8 | Vergleichsbeispiel B |
| Polyisocyanat A) | | |
| entsprechend Bsp. 1) | 35,3 | 35,7 |
| Polyacrylat B₁) | | |
| entsprechend Bsp. 4) | 62,7 | 63,3 |
| Katalysator C) | | |
| Zinn(II)octanoat | 1,0 | - |
| Zusatzmittel D) | | |
| ®Perenol F 30 P ^{*)} | 1,0 | 1,0 |
| | 1̅0̅0̅,̅0̅ | 1̅0̅0̅,̅0̅ |

| | | |
|---|---|---|
| ^{*)} ®Perenol F 30 P ist ein handelsübliches Verlaufsmittel auf Basis eines Butylacrylatcopolymeren, Hersteller; Fa. Henkel, Düsseldorf | | |

Zur Bereitung der Pulverlacke werden die Komponenten mit Hilfe eines Doppelwellen-Extruders ZDSK 28 (Fa. Werner & Pfleiderer) bei 200 U/min, einer Gehäusetemperatur von 100°C, einer Austrittstemperatur von 120°C und einer Verweilzeit von ca. 70 sec, extrudiert und die erhaltenen Granulate mit Hilfe einer Sichtermühle ACH 2 (Fa. Hosokawa Mikropul) mit einem 90 µm-Sieb gemahlen und gesiebt.

Die Gelierzeiten der Lacke betragen:

| | Beispiel 8 | Vergleichsbeispiel B |
|---|---|---|
| 180°C | 95 sec | 310 sec |
| 160°C | 330 sec | 900 sec |
| (Messung nach DIN 55 990, Teil 8, Punkt 5.1) | | |

Mit dem erfindungsgemäßen Pulver entsprechend Beispiel 8 wird ein entfettetes Stahlblech beschichtet und auf dem Gradientenofen 20 Minuten bzw. 30 Minuten bei 150°C/160°C/170°C/180°C eingebrannt, so daß eine Schichtdicke von 60 ± 5 µm erreicht wird,

| Prüfergebnisse ^{*)} | | | | | | | | |
|---|---|---|---|---|---|---|---|---|
| | 150°C | | 160°C | | 170°C | | 180°C | |
| | 20' | 30' | 20' | 30' | 20' | 30' | 20' | 30' |
| G 20 | 58 | 65 | 61 | 58 | 59 | 55 | 54 | 56 |
| G 60 | 97 | 102 | 98 | 95 | 92 | 90 | 89 | 88 |
| ET | 0,3 | 4,5 | 6,0 | 7,0 | 5,1 | 6,4 | 6,3 | 7,3 |
| AB | 1 | 0 | 0 | 0 | 0 | 0 | 0 | 0 |

| | | | | | | | | |
|---|---|---|---|---|---|---|---|---|
| ^{*)} G 20, G 60 = Glanz nach Gardner in %, 20° bzw. 60° Reflexionswinkel | | | | | | | | |
| ET = Erichsentiefung, DIN 53 156 AB = Acetonbeständigkeit (50 Doppelhübe mit getränktem Wattebausch) 0 = Film intakt 1 = Filmoberfläche angeweicht 2 = Film bis zum Untergrund angequollen | | | | | | | | |

Der Versuch zeigt, daß bereits nach 30 min/150°C ein lösemittelfester Lack erzielt worden ist (AB = 0) und bei 160°C Einbrenntemperatur auch die erzielbare Erichsentiefung bereits voll erreicht ist.

### Vergleichsbeispiele C) und D) (Verwendung)

Zum Vergleich werden entsprechend Beispiel 8 und Vergleichsbeispiel B) Pulverklarlacke aus einem Polyisocyanat auf Basis des Isophorondiisocyanats des Vergleichsbeispiels A) hergestellt und geprüft.

| | Vergleichsbeispiel C | Vergleichsbeispiel D |
|---|---|---|
| Polyisocyanat entsprechend Vgl.Bsp. A) | 36,2 | 36,6 |
| Polyacrylat B₁) entsprechend Bsp. 4) | 61,8 | 62,4 |
| Katalysator C) Zinn(II)octanoat | 1,0 | - |
| Zusatzmittel D) ®Perenol F 30 P | 1,0 | 1,0 |
| | 1̅0̅0̅,̅0̅ | 1̅0̅0̅,̅0̅ |

Die Herstellung der Pulverlacke erfolgt analog Beispiel 8 bzw. Vergleichsbeispiel B.

Die Gelierzeiten der Lacke betragen:

| | Vergleichsbeispiel C | Vergleichsbeispiel D |
|---|---|---|
| 180°C | 125 sec | 340 sec |
| 160°C | 500 sec | 970 sec |

Mit dem Pulver entsprechend Vergleichsbeispiel C wird ein entfettetes Stahlblech beschichtet und auf dem Gradientenofen 30 min bei 150°/160°/170°/180°C eingebrannt, Schichtdicke: 60 ± 5 µm.

| Prüfergebnisse ^{*)} | | | | |
|---|---|---|---|---|
| | 150°C | 160°C | 170°C | 180°C |
| G 20 | 69 | 71 | 69 | 68 |
| G 60 | 111 | 111 | 111 | 108 |
| ET | 0,3 | 2,0 | 5,8 | 7,4 |
| AB | 2 | 1 | 0 | 0 |

Der Versuch zeigt, daß im Gegensatz zu dem erfindungsgemäßen Beispiel 8 erst oberhalb 170°C Einbrenntemperatur bei 30 min Einbrennzeit lösemittelfeste Lacke erhalten werden und erst nach 30 min/180°C die erzielbare Erichsentiefung erreicht ist.

### Beispiele 9 und 10 (Verwendung)

Diese erfindungsgemäßen Beispiele zeigen, daß bei Mitverwendung eines Phosphit-Stabilisators D) gegen Überbrennvergilbung Lacke mit deutlich höheren Weißgraden (Beispiel 10) erhalten werden.

Aus folgenden Komponenten werden pigmentierte Pulverlacke bereitet:

| (Angaben in Gew.-Teilen) | | |
|---|---|---|
| | Beispiel 9 | Beispiel 10 |
| Polyisocyanat A) entsprechend Bsp. 1) | 27,2 | - |
| Polyisocyanat A) entsprechend Bsp. 2) | - | 27,2 |
| Polyacrylat B₁) entsprechend Bsp. 4) | 42,1 | 42,1 |
| Katalysator C) Zinn(II)octanoat | 0,4 | 0,4 |
| Zusatzmittel D) ®Modaflow P 111 ^{*)} | 0,3 | 0,3 |
| TiO₂-Pigment Bayertitan R-KB-4 | 30,0 | 30,0 |
| | 1̅0̅0̅,̅0̅ | 1̅0̅0̅,̅0̅ |

| | | |
|---|---|---|
| ^{*)} ®Modaflow P III ist ein handelsübliches Verlaufsmittel auf Basis eines Butylacrylatcopolymeren, Hersteller: Fa. Monsanto | | |

Zur Bereitung der pigmentierten Weißlacke werden die Komponenten mit Hilfe eines Extruders, Buss Co-Kneter PLK 46, bei 150 U/Minute, einer Gehäusetemperatur von 70°C/100°C, einer Wellentemperatur von 70°C und einer Austrittstemperatur von ca, 120°C extrudiert und die erhaltenen Granulate mit Hilfe einer Sichtermühle ACM 2 (Fa, Hosokawa Mikropul) mit einem 90 µm-Sieb gemahlen und gesiebt. Beschichtungen von 80 ± 5 µm auf entfetteten Stahlblechen werden 10 min bei 200°C ausgehärtet und je 1 Blech zusätzlich 15 min bei 200°C bzw. 20 min bei 220°C überbrannt.

| Prüfergebnisse: | | |
|---|---|---|
| | Beispiel 9 | Beispiel 10 |
| G 60 | 82 | 82 |
| ET | 7,4 | 7,8 |
| AB | 0 - 1 | 0 - 1 |
| Weißgrad ^{*)} | 78,4 | 83,1 |
| nach Überbrennen + 15' 200°C | 69,6 | 79,2 |
| nach Überbrennen + 20' 220°C | 48,7 | 67,8 |

| | | |
|---|---|---|
| ^{*)} Weißgrad nach Berger/Elrephomat | | |

Diese Beispiele belegen, daß bei dem stabilisierten Pulverlack (Beispiel 10) trotz der sehr hohen Einbrenntemperatur und des Überbrennens Lacke mit guten Weißgraden erhalten werden, während der nicht stabilisierte Pulverlack (Beispiel 9) nach Überbrennen einen bezüglich des Weißgrads deutlich schlechteren Lack liefert.

## Patentansprüche

1. Pulverlack zur Herstellung von vergilbungsfreien elastischen Beschichtungen, bestehend im wesentlichen aus einem unterhalb 30°C festen und oberhalb 120°C flüssigen Gemischs aus
A) einer Polyisocyanatkomponente, bestehend aus mindestens einem mit ε-Caprolactam blockierten Polyisocyanat,
B) einer Polyolkomponente,
C) Katalysatoren für die Reaktion zwischen Hydroxyl- und blockierten Isocyanatgruppen,
und gegebenenfalls
D) aus der Pulverlacktechnologie bekannten Hilfs- und Zusatzmitteln,
wobei die Komponenten A) und B) in solchen Mengen vorliegen, die einem Äquivalentverhältnis von blockierten Isocyanatgruppen zu Hydroxylgruppen von 0,5 ; 1 bis 1,2 : 1 entsprechen, dadurch gekennzeichnet, daß
A) die blockierten Polyisocyanate der Komponente A) einen Gehalt an blockierten Isocyanatgruppen (berechnet als NCO, Molekulargewicht = 42) von 3,0 bis 14,0 Gew.-% bei einer Funktionalität, bezogen auf die blockierten Isocyanatgruppen, von 1,9 bis 2,3 aufweisen und ε-Caprolactam-blockierte Umsetzungsprodukte von 4,4'-Diisocyanatodicyclohexylmethan mit einer Polyolkomponente darstellen, die zumindest zu 50 Gew.-% aus mindestens einem aliphatischen oder cycloaliphatischen Diol mit 4 bis 12 Kohlenstoffatomen bei einem (mittleren) Molekulargewicht der Diolkomponente von 90 bis 400 besteht,
B) die Polyolkomponente aus mindestens einem Polyhydroxypolyacrylat des OH-Zahlbereichs 40 bis 120 besteht,
und
C) die Katalysatorkomponente aus mindestens einer organischen Zinnverbindung besteht.

2. Pulverlack gemäß Anspruch 1, dadurch gekennzeichnet, daß die Komponente B) aus mindestens einem Copolymerisat aus
a) 20 bis 50 Gew.-Teilen Methylmethacrylat,
b) 20 bis 40 Gew.-Teilen Alkylestern der Acryl- und/oder Methacrylsäure mit 2 bis 8 Kohlenstoffatomen im Alkylrest,
c) 0 bis 30 Gew.-Teilen Styrol,
d) 10 bis 30 Gew.-Teilen Hydroxyethylmethacrylat und/oder Hydroxypropylmethacrylat
und
e) 0,1 bis 3,0 Gew.-Teilen Acrylsäure und/oder Methacrylsäure
besteht, wobei die Summe der Gew.-Teile der Komponenten a) bis e) 100 ergibt.

3. Pulverlack gemäß Anspruch 1 und 2, dadurch gekennzeichnet, daß die Komponente B) aus mindestens einem Copolymerisat aus
a) 30 bis 45 Gew.-Teilen Methylmethacrylat,
b) 20 bis 30 Gew.-Teilen Alkylestern der Acryl- und/oder Methacrylsäure mit 2 bis 8 Kohlenstoffatomen im Alkylrest,
c) 5 bis 25 Gew.-Teilen Styrol,
d) 12 bis 28 Gew.-Teilen Hydroxyethylmethacrylat und/oder Hydroxypropylmethacrylat
und
e) 0,5 bis 1,5 Gew.-Teilen Acrylsäure und/oder Methacrylsäure
besteht, mit der Maßgabe, daß die Summe der Gewichtsteile der Komponenten a) bis e) 100 ergibt.

4. Pulverlack gemäß Anspruch 1 bis 3, dadurch gekennzeichnet, daß die Komponente A) einen Gehalt an blockierten Isocyanatgruppen (berechnet als NCO) von 7,0 bis 11,0 Gew.-% bei einer Funktionalität, bezogen auf die blockierten Isocyanatgruppen, von 2,0 bis 2,2 aufweist, wobei die mit 4,4'-Diisocyanatodicyclohexylmethan umgesetzte Polyolkomponente zumindest zu 80 Gew.-% aus mindestens einem zweiwertigen Alkohol mit 6 bis 12 Kohlenstoffatomen besteht.

5. Pulverlack gemäß Anspruch 1 bis 4, dadurch gekennzeichnet, daß er als Zusatzmittel D), gegebenenfalls neben weiteren Hilfs- und Zusatzmitteln, als Stabilisator mindestens ein, gegebenenfalls inerte Substituenten aufweisendes Trialkyl- und/oder -arylphosphit enthält.

6. Pulverlack gemäß Anspruch 5, dadurch gekennzeichnet, daß er mindestens ein Tris-(alkylphenyl)-phosphit mit Alkylsubstituenten mit 6 bis 12 Kohlenstoffatomen enthält.

7. Pulverlack gemäß Anspruch 1 bis 6, dadurch gekennzeichnet, daß er als Katalysator C) Zinn(II)octanoat enthält.

8. Verwendung der Pulverlacke gemäß Anspruch 1 bis 7 zur Beschichtung beliebiger hitzeresistenter Substrate nach den Methoden der Pulverlacktechnologie.

9. Verwendung gemäß Anspruch 8 als Automobilklarlack.

## Claims

1. A powder lacquer for the production of non-yellowing elastic coatings consisting essentially of a mixture solid below 30°C and liquid above 120°C of
A) a polyisocyanate component consisting of at least one ε-caprolactam-blocked polyisocyanate,
B) a polyol component,
C) catalysts for the reaction between hydroxyl groups and blocked isocyanate groups
and, optionally,
D) auxiliaries and additives known from powder lacquer technology,
components A) and B) being present in quantities which correspond to an equivalent ratio of blocked polyisocyanate groups to hydroxyl groups of 0.5:1 to 1.2:1, characterized in that,
A) the blocked polyisocyanates of component A) have a content of blocked isocyanate groups (expressed as NCO, molecular weight = 42) of 3.0 to 14.0% by weight for a functionality, based on the blocked isocyanate groups, of 1.9 to 2.3 and ε-caprolactam-blocked reaction products of 4,4'-diisocyanatodicyclohexyl methane with a polyol component of which at least 50% by weight consists of at least one aliphatic or cycloaliphatic diol containing 4 to 12 carbon atoms for an (average) molecular weight of the diol component of 90 to 400,
B) the polyol component consists of at least one polyhydroxypolyacrylate having an OH value of 40 to 120
and
C) the catalyst component consists of at least one organotin compound.

2. A powder lacquer as claimed in claim 1, characterized in that component B) consists of at least one copolymer of
a) 20 to 50 parts by weight of methyl methacrylate,
b) 20 to 40 parts by weight of alkyl esters of acrylic and/or methacrylic acid containing 2 to 8 carbon atoms in the alkyl radical,
c) 0 to 30 parts by weight of styrene,
d) 10 to 30 parts by weight of hydroxyethyl methacrylate and/or hydroxypropyl methacrylate
and
e) 0.1 to 3.0 parts by weight of acrylic acid and/or methacrylic acid,
the sum total of the parts by weight of components a) to e) being 100.

3. A powder lacquer as claimed in claims 1 and 2, characterized in that component B) consists of at least one copolymer of
a) 30 to 45 parts by weight of methyl methacrylate,
b) 20 to 30 parts by weight of alkyl esters of acrylic and/or methacrylic acid containing 2 to 8 carbon atoms in the alkyl radical,
c) 5 to 25 parts by weight of styrene,
d) 12 to 28 parts by weight of hydroxyethyl methacrylate and/or hydroxypropyl methacrylate
and
e) 0.5 to 1.5 parts by weight of acrylic acid and/or methacrylic acid,
with the proviso that the sum total of the parts by weight of components a) to e) is 100.

4. A powder lacquer as claimed in claims 1 to 3, characterized in that component A) has a content of blocked isocyanate groups (expressed as NCO) of 7.0 to 11.0% by weight for a functionality, based on the blocked isocyanate groups, of 2.0 to 2.2, at least 80% by weight of the polyol component reacted with 4,4'-diisocyanatodicyclohexyl methane consisting of at least one dihydric alcohol containing 6 to 12 carbon atoms.

5. A powder lacquer as claimed in claims 1 to 4, characterized in that it contains at least one trialkyl and/or triaryl phosphite optionally bearing inert substituents as additive D) (stabilizer), optionally in addition to other auxiliaries and additives.

6. A powder lacquer as claimed in claim 5, characterized in that it contains at least one tris-(alkylphenyl)-phosphite bearing C₆₋₁₂ alkyl substituents.

7. A powder lacquer as claimed in claims 1 to 6, characterized in that it contains tin(II) octanoate as catalyst C).

8. The use of the powder lacquers claimed in claims 1 to 7 for coating heat-resistant substrates of any kind by any of the methods used in powder lacquer technology.

9. The use claimed in claim 8 as a clear automobile lacquer.

## Revendications

1. Vernis en poudre pour l'application de revêtements élastiques et qui ne jaunissent pas, consistant essentiellement en un mélange solide au-dessous de 30°C et liquide au-dessus de 120°C, de
A) un composant polyisocyanate consistant en au moins un polyisocyanate bloqué par l'ε-caprolactame,
B) un composant polyol,
C) des catalyseurs de la réaction entre les groupes hydroxy et les groupes isocyanates bloqués,
et le cas échéant
D) des produits auxiliaires et additifs connus dans l'industrie des vernis en poudre,
les composants A et B étant présents en quantités correspondant à un rapport de 0,5 : 1 à 1,2 : 1 entre les équivalents de groupes isocyanates bloqués et les équivalents de groupes hydroxy, et caractérisé en ce que
A) les polyisocyanates bloqués du composant A ont une teneur en groupes isocyanates bloqués (exprimée en NCO, poids équivalent = 42) de 3,0 à 14,0 % en poids et une fonctionnalité, relativement aux groupes isocyanates bloqués, de 1,9 à 2,3, et ils consistent en produits de réaction du 4,4'-diisocyanatodicyclohexylméthane avec un composant polyol, bloqués par l'ε-caprolactame, le composant polyol en question consistant pour au moins 50 % en poids en au moins un diol aliphatique ou cycloaliphatique en C₄-C₁₂ au poids moléculaire (moyen) de 90 à 400,
B) le composant polyol consiste en au moins un polyhydroxypolyacrylate dont l'indice d'OH est de 40 à 120,
et
C) le composant catalyseur consiste en au moins un composé organique de l'étain.

2. Vernis en poudre selon revendication 1, caractérisé en ce que le composant B consiste en au moins un copolymère de
a) 20 à 50 parties en poids de méthacrylate de méthyle,
b) 20 à 40 parties en poids d'esters alkyliques de l'acide acrylique et/ou méthacrylique contenant 2 à 8 atomes de carbone dans le groupe alkyle,
c) 0 à 30 parties en poids de styrène,
d) 10 à 30 parties en poids de méthacrylate d'hydroxyéthyle et/ou de méthacrylate d'hydroxypropyle
et
e) 0,1 à 3,0 parties en poids d'acide acrylique et/ou méthacrylique,
la somme des parties en poids des composants a à e étant égale à 100.

3. Vernis en poudre selon les revendications 1 et 2, caractérisé en ce que le composant B consiste en au moins un copolymère de
a) 30 à 45 parties en poids de méthacrylate de méthyle,
b) 20 à 30 parties en poids d'esters alkyliques de l'acide acrylique et/ou méthacrylique contenant 2 à 8 atomes de carbone dans le groupe alkyle,
c) 5 à 25 parties en poids de styrène,
d) 12 à 28 parties en poids de méthacrylate d'hydroxyéthyle et/ou de méthacrylate d'hydroxypropyle
et
e) 0,5 à 1,5 partie en poids d'acide acrylique et/ou méthacrylique,
la somme des parties en poids des composants a à e étant égale à 100.

4. Vernis en poudre selon les revendications 1 à 3, caractérisé en ce que le composant A a une teneur en groupes isocyanates bloqués (exprimée en NCO) de 7,0 à 11,0 % en poids et une fonctionnalité, relativement aux groupes isocyanates bloqués, de 2,0 à 2,2, le composant polyol ayant réagi avec le 4,4'-diisocyanatodicyclohexylméthane consistant pour au moins 80 % en poids en au moins un alcool divalent en C₆-C₁₂.

5. Vernis en poudre selon les revendications 1 à 4, caractérisé en ce que l'on utilise en tant qu'additif D, le cas échéant avec d'autres produits auxiliaires et additifs, et en tant que stabilisant, au moins un phosphite de trialkyle et/ou de triaryle portant éventuellement des substituants inertes.

6. Vernis en poudre selon revendication 5, caractérisé en ce qu'il contient au moins un phosphite de tris-(alkylphényle) à substituants alkyles en C₆-C₁₂.

7. Vernis en poudre selon les revendications 1 à 6, caractérisé en ce qu'il contient de l'octanoate d'étain-II en tant que catalyseur C.

8. Utilisation des vernis en poudre selon les revendications 1 à 7 pour le revêtement de supports quelconques résistant à la chaleur par les techniques usuelles d'utilisation des vernis en poudre.

9. Utilisation selon revendication 8, en tant que vernis clair pour automobiles.
